# EUROPEAN PATENT APPLICATION

(11) **EP 0 758 528 A1**
(43) Date of publication of application: **19.02.1997**
(21) Application number: 96305242.8
(22) Date of filing: 17.07.1996
(51) Int. Cl.: A23G 3/30

(54) **Chewing gum composition containing erythritol**

(30) Priority: 20.07.1995 GB 9514893
(71) Applicant: CERESTAR HOLDING BV, NL-4550 AA Sas Van Gent (NL)
(72) Inventor: Gonze, Michel Henri Andre, 1020 Bruxelles (BE); Van der Schueren, Freddy Maurits Luc, 9300 Aalst (BE)
(74) Representative: Wilkinson, Stephen John

(57) **Abstract**

The present invention relates to the composition of chewing gums. Specifically to so-called sugar-free chewing gums. The present invention discloses a chewing gum composition having a considerably increased shelf life as apparent from hardness and flexibility experiments. This increased shelf life is due to the partial replacement of sorbitol by another polyol, preferably erythritol. The invention also discloses a method for producing the composition and for making chewing gums with the mentioned composition.

## Description

The present invention relates to the composition of chewing gums. Specifically to so-called sugar-free chewing gums. The present invention discloses a chewing gum composition having a considerably increased shelf life as apparent from hardness and flexibility experiments. The invention also discloses a method for producing the composition and for making chewing gums with the mentioned composition.

In recent years there is a growing tendency to replace sugar and sugar syrups normally found in chewing gum by other carbohydrates or noncarbohydrates. Sugar alcohols or polyols are well-known products to replace the bulk sweetener, normally sucrose, in chewing gum. This gives rise to the so-called sugar-free chewing gums. Sorbitol, mannitol and xylitol are well-known examples of polyols which are used as sugar replacement.
There is a constant search for new polyols which have better properties with respect to taste, texture and shelf life. One of these polyols is erythritol. Erythritol does not contribute to carries, does not significantly contribute to the amount of calories and does not cause gastric distress.

As far as the use of polyols and particularly erythritol in chewing gum is concerned the following patent applications are of interest.

European patent application EP-A-0 009 325 discloses a method of reducing dental caries with sugar-free foodstuffs. A chewing gum composition comprising erythritol is disclosed the composition also contains an intense sweetener. In one of the examples a chewing gum composition is demonstrated which contains only one polyol i.e. erythritol.

European patent EP 0 430 663 describes a chewing gum composition which contains as a sweetening agent a mixture of erythritol and a liquid sugar or liquid sugar alcohol other than erythritol the amount of erythritol in the mixture being greater than 60 weight %. U.S. patent No. 5,120,550 is directed to a gum composition utilising a low moisture sugarless syrup containing maltitol. The maltitol considerably reduces the hygroscopic nature of the chewing gum preparation.
U.S. patent No. 5,397,579 discloses an environmentally stable chewing gum composition containing erythritol. The composition consists essentially of gum base, erythritol and flavour.
Japanese patent publication Sho 64-51045 (application Sho 62-207798) describes a process for preparing a chewing gum comprising three steps. In a first step a saccharide mixture containing 30 to 60 % erythritol and a saccharide selected from sugars and sugar alcohols (excluding erythritol) is melted. The molten mixture is mixed in the second step with a gum base at between 100°C and 130°C and in a third step the mixture is cooled and solidified. It is described that the amount of erythritol in the mixture of erythritol and sugar or other sugar alcohol must be in the range 30 to 60 weight %, preferably 30 to 50 weight % otherwise the chewing gum is unacceptable. At an amount of less than 30 weight % erythritol the chewing gum has too little elasticity, becomes highly hygroscopic and too soft to chew.

Furthermore it is known that depending on the composition chewing gums have a tendency to become brittle during ageing.

The present invention describes a chewing gum composition which overcomes the indicated problems i.e. the compositions of the present invention contain a relatively low amount of erythritol and are nevertheless not too soft. The chewing gums according to the invention do not become brittle even aftrer prolonged storage. The invention can be described in general terms as follows; in normal sugar-free chewing gum preparations the sugar or sugar alcohol is partially replaced by a sugar alcohol i.e. erythritol.

The present invention discloses that the shelf life of chewing gum in terms of flexibility can be considerably increased upon partial or complete replacement of the polyol by erythritol.

The present invention discloses a chewing gum composition which does not become brittle after storage during a few months consisting essentially of gum base, a polyol, optionally mannitol and maltitol, glycerol and erythritol characterised in that between 5 and 30% of the polyol is erythritol.
Preferably the chewing gum composition comprises
a) between 20 and 60 % gum base,
b) between 5 and 60 % polyol,
c) between 0 and 20 % mannitol,
d) between 0 and 10% maltitol syrup,
e) between 0 and 8% glycerol and
erythritol characterised in that between 5 and 30% of the polyol is erythritol.

The preferred compositions of the present invention comprise sorbitol as the polyol and this sorbitol is at least partially replaced by erythritol a preferred amount of erythritol is between 10 and 25%.

The present invention further discloses a method for producing a chewing gum composition characterised in that it comprises the following steps;
heat a kneader to about 50°C, add warm gum base having about the same temperature, knead for 1-10 minutes, add 50% of the sorbitol powder and/or the polyol, knead for 1-10 minutes, add the remaining sorbitol powder and or polyol powder, knead for 1-10 minutes add the other components such as glycerol, the flavour with intermittent kneading, extrude and laminate.

- Figure 1: shows the gum hardness for different gum mass compositions immediately after preparation of low liquid phase type gum.
- Figure 2: shows the gum mass flexibility for different gum mass compositions immediately after preparation of low liquid phase type gum.
- Figure 3: shows the gum mass flexibility of the samples of Figure 2 after 3 months storage.
- Figure 4: shows the gum hardness for different gum mass compositions immediately after preparation of medium liquid phase type gum.
- Figure 5: shows the gum mass flexibility for different gum mass compositions immediately after preparation of medium liquid phase type gum.
- Figure 6: shows the gum mass flexibility of the samples of Figure 5 after 3 months storage.
- Figure 7: shows the gum mass flexibility for different gum mass compositions conaining 5%, 20% and 50% erythritol immediately after preparation of medium liquid phase type gum.
- Figure 8: shows the gum mass flexibility of the samples of Figure 7 after 2 months storage.
- Figure 9: shows the chewing gum hardness of medium liquid phase gums at different temperatures using 20% erythritol in the form of a powder with different particle size distribution three different powders were used ie. smaller than 0.12 mm, between 0.12 and 0.3 mm and larger than 0.3 mm.

Chewing gum compositions may contain 5 to 55 weight % gum base and 25 to 85% weight % sweetening agent. Chewing gum is made from a syrup which is combined with a gum base. All percentages herein are weigth percentages unless specifically indicated otherwise.
The gum base may be chosen from gums conventionally used for this purpose eg. natural or synthetic resins such as chicle, natural rubber, guttapercha, lechi caspi, sorva, guttakay, crown gum, butadiene-styrene copolymers, polyisobutylene, isobutylene-isoprene copolymers, polyvinyl acetate and polyvinyl alcohol. The gum base which is water insoluble and chewable further comprises elastomers, resins, fats, oils, waxes, softeners and fillers. As a softener or plasticiser the following molecules can be used lanolin, propylene glycol, glycerine or triacetin in amounts up to 10 weight %. Other additives are a filler eg. calcium carbonate, magnesium carbonate, alumina, talc in amounts of up to 20 weight %, an anti-sticking agent eg. mannitol and a flavouring. Suitable flavourings include mint and a variety of fruit flavours. Other ingredients conventionally used in chewing formulations may also be used in the compositions accordign to the present invention including small amounts of high intensity sweeteners such as saccharin and aspartame.

The syrup consists of a polyol or a mixture of polyols, a plasticizer and water. Suitable polyols include but are not limited to sorbitol, mannitol, xylitol, hydrogenated starch hydrolysates, maltitol, lactitol, palatinit or combinations thereof.
The plasticizer is added in order to optimise the chewability. Suitable plasticizers are for example glycerol and propylene glycol.
Optionally flavours, colours, artificial sweeteners, preservatives and processing aids may be added.

The gum base and the other components are mixed in such amounts that chewing gums can be manufactured from the mixtures having certain desired characteristics. These characteristics are determined by amongst others sensorial and storage prerequisites.

The present invention discloses that if a part or all of the polyol found in the normal sugar-free chewing gum composition is replaced by erythritol the resulting chewing gum is much more stable with respect to flexibility after prolonged storage. Therefore, the shelf life of the chewing gum is considerably increased.

The erythritol used in the present experiments had a particle size distribution corresponding to the distribution which is normally used in chewing gum. A preferred particle size for erythritol is between 100 and 300 mesh.

The chewing gum centers are made according to the following method a conventional kneader is heated to about 50°C and warm gum base having about the same temperature is added. Kneading is continued for 5 minutes. 50% of the sorbitol powder and/or the polyol are added and kneading is continued for 5 minutes. The remaining sorbitol powder is added, kneading is continued. for 5 minutes.
Glycerol is added and kneading is continued for 3 minutes. Finally, the flavour is added and kneading is continued for 5 minutes. The mass is then extruded and laminated. Optionally the centers obtained in this manner may be coated by known methods.

The present invention is illustrated by examples wherein low liquid phase and medium liquid phase type chewing gums were prepared. Both types of chewing gum have been prepared with sorbitol powder (40-55%). 10 % of this powder was then replaced by the desired polyol. Maltitol crystals (Malbit^{tm}CH), xylitol crystals, erythritol crystals (C*Eridex^{tm}) and FOS (fructo-oligosaccharide) type (Actilight^{tm}) were tested. The test results show that there is no difference in hardness and flexibility using the different mentioned polyols immediately after preparation of the chewing gum mass. However, after storage of the product it is found that gum mass containing erythritol is much more flexible than the other gum masses.
In a further experiment it was shown that with 100% erythritol powder instead of sorbitol the chewing gum retained flexibility after prolonged storage.
In Example 4 it is demonstrated that the quality of the chewing gum depends on the percentage of erythritol that is used. It can be seen that 20% gives better results than 5 or 50%. This effect is even more pronounced after 2 months storage.
The hardness of the chewing gum is dependent on the particle size distribution of the powdered material for erythritol this is shown in Example 5 where it appears that the chewing gum becomes softer when the particle size is increased.

### Experimental

Gum mass hardness immediately after production was measured according to the following method.
Plastic cups filled with the extruded chewing gum mass is cooled to 45°C. A cylindrical plunger with a cross section of 1 cm is penetrated 10 mm into the gum mass.

Gum mass flexibility was measured according to the following method.
The extruded rope is fixed between the two jaws of an instron-dynamometer. After cooling the rope to 44°C the crosshead is moved down (9%) to obtain a bended rope. Subsequently the dynamometer is set on cycling. During the test a temperature of 12°C is used. The number of cycles before breakage of the rope and the exerted (increasing) forces are recorded.

### Example 1

Low liquid phase chewing gum formulations of the composition presented in Table 1 were prepared as follows. The polyols were used in such an amount that about 10% of the sorbitol was replaced with the desired polyol.

The kneader is heated to about 50°C and warm gum base having about the same temperature is added. Kneading is continued for 5 minutes. 50% of the sorbitol powder and/or the polyol are added and kneading is continued for 5 minutes. The remaining sorbitol powder is added, kneading is continued for 5 minutes.Glycerol is added and kneading is continued for 3 minutes. Finally, the flavour is added and kneading is continued for 5 minutes. The mass is then extruded and laminated.

**Table 1.**

| Low liquid phase chewing gum formulation | | |
|---|---|---|
| | 100% sorbitol | 10% polyol |
| | % | % |
| Gum base | 35 | 35 |
| Sorbitol powder (P6) | 46 | 41.4 |
| Polyol type | - | 4.6 |
| Mannitol | 15 | 15 |
| Glycerol | 2 | 2 |
| Mint flavour | 2 | 2 |

Maltitol crystals (Malbit^{tm}CH), xylitol crystals, erythritol crystals (C 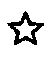 Eridex^{tm}) and FOS (fructo-oligosaccharide) type (Actilight^{tm}) were tested.

### Hardness determination of the gum mass after preparation

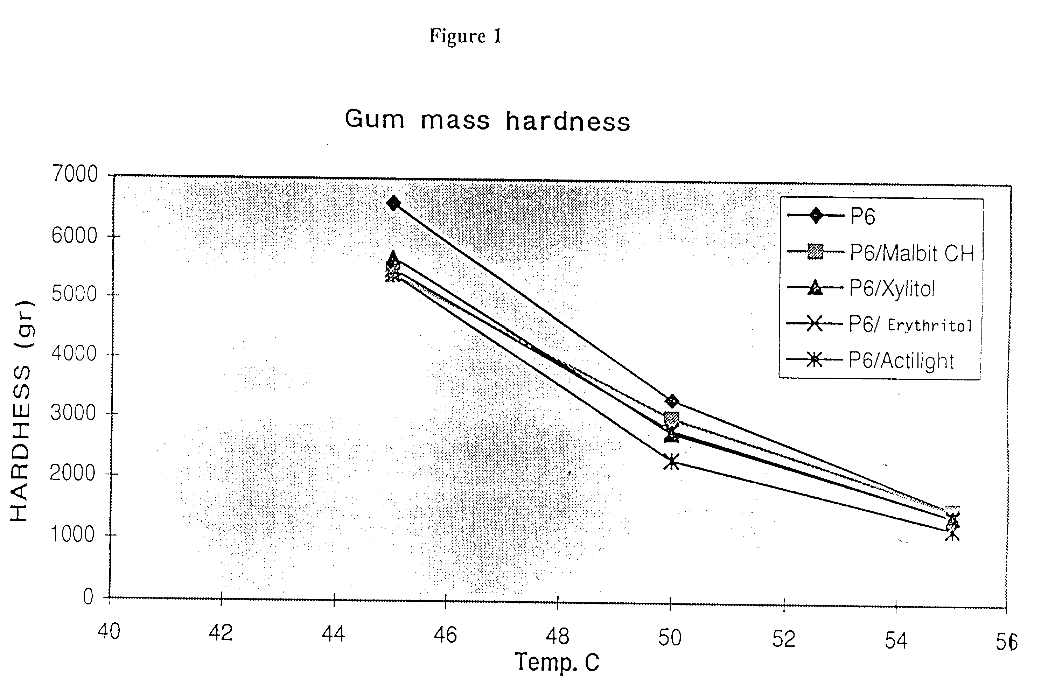

The hardness measurement of the gum mass obtained by penetration at different temperatures shows no significant differences for all the tested products.
The pure sorbitol type (P6 grade) is slightly harder but the softer gum mass with the polyols has no negative influence on further processing e.g. extrusion (see Figure 1).

### Flexibility of the gum mass

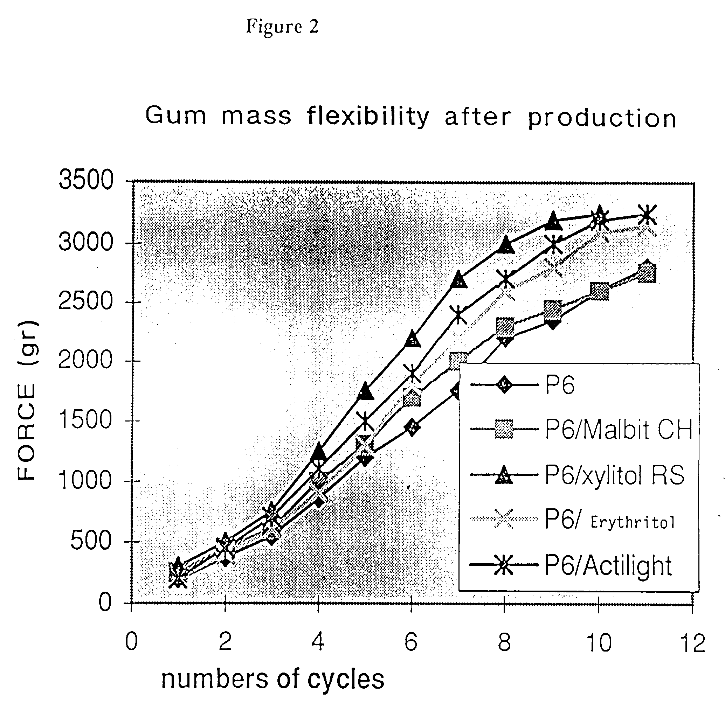

The number of cycles before breakage of the rope and force increase are measured by means of a dynamometer.
Immediately after production no significant differences are measured on the fresh gum masses in comparison with the sorbitol powder (see Figure 2).

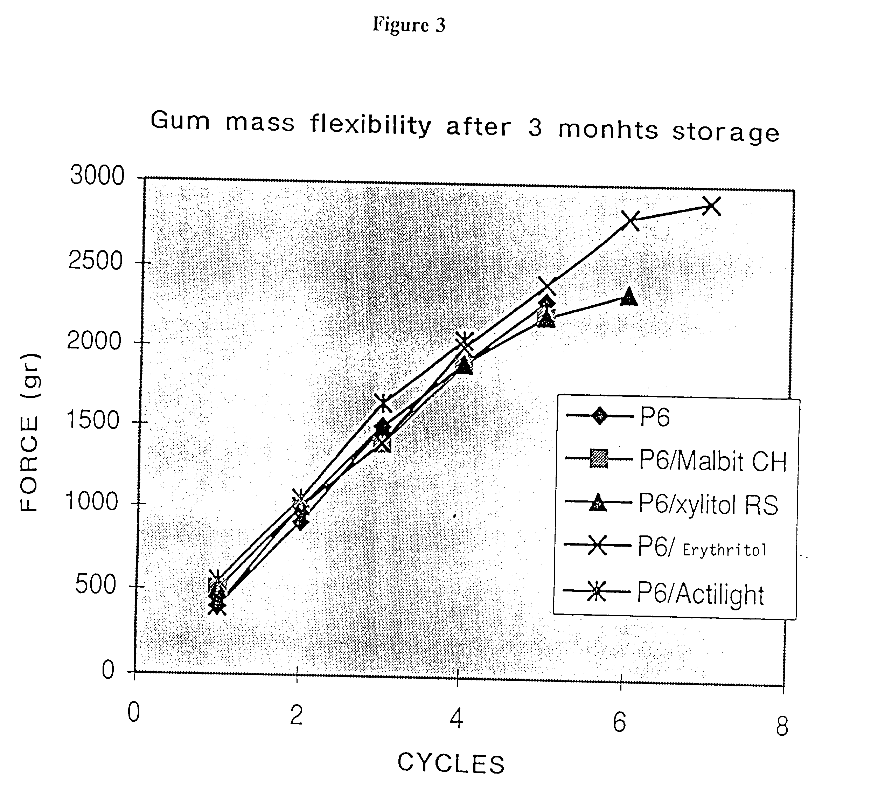

Wrapped samples were stored during 3 months at 35°C and 70% relative humidity. The results show that a higher degree of flexibility is obtained for the gum mass containing erythritol. All other compositions, including sorbitol are less flexible (see Figure 3).

### Example 2

Medium liquid phase chewing gum formulations of the composition presented in Table 2 were prepared using the method described in Example 1. The polyols were used in such an amount that about 10% of the sorbitol was replaced with the desired polyol.

**Table 2**

| Medium liquid phase chewing gum formulation | | |
|---|---|---|
| | 100% sorbitol | 10% polyol |
| | % | % |
| Gum base | 36.5 | 36.5 |
| Sorbitol powder (P6) | 51.5 | 46.3 |
| Polyol type | - | 5.2 |
| Mannitol | 2.1 | 2.1 |
| Maltitol syrup (Maltidex^{tm}210) | 5.2 | 5.2 |
| Glycerol | 3.1 | 3.1 |
| Flavour | 1.6 | 1.6 |

Maltitol crystals (Malbit^{tm}CH), xylitol crystals, erythritol crystals (C 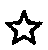 Eridex^{tm}) and FOS (fructo-oligosaccharide) type (Actilight^{tm}) were tested.

### Hardness determination of the gum mass after preparation

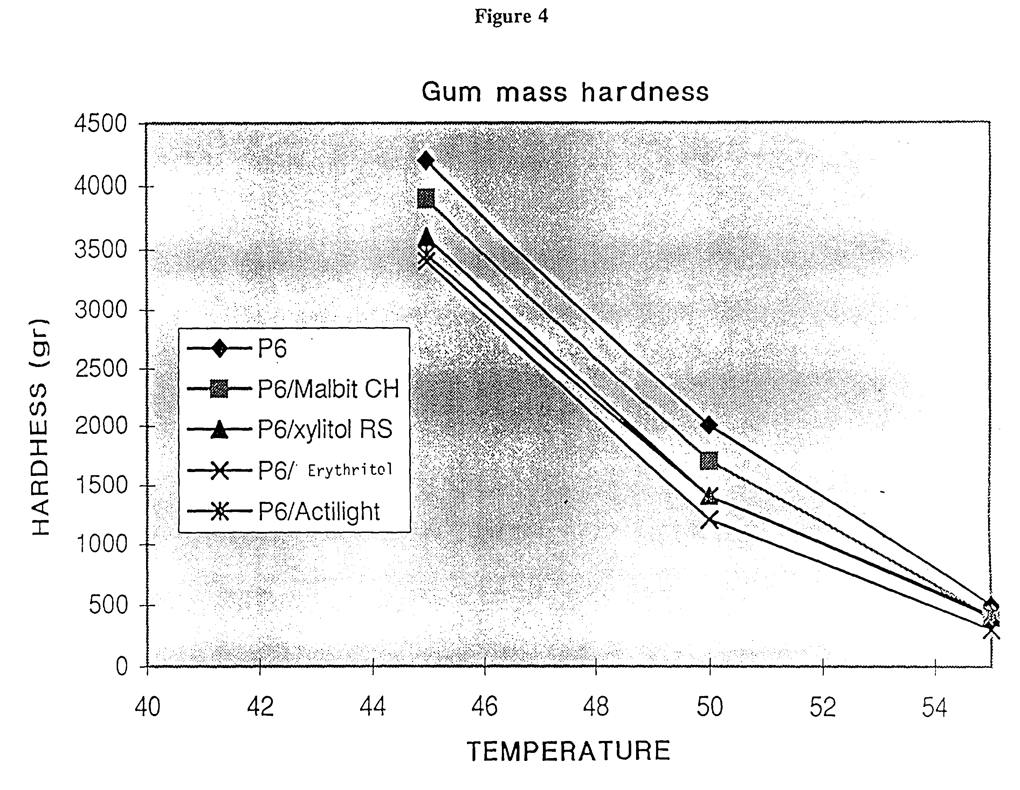

The hardness measurement of the gum mass obtained by penetration at different temperatures shows no significant differences for all the tested products.
The pure sorbitol type (P6 grade) is slightly harder but the softer gum mass with the polyols has no negative influence on further processing e.g. extrusion (see Figure 4).

### Flexibility of the gum mass

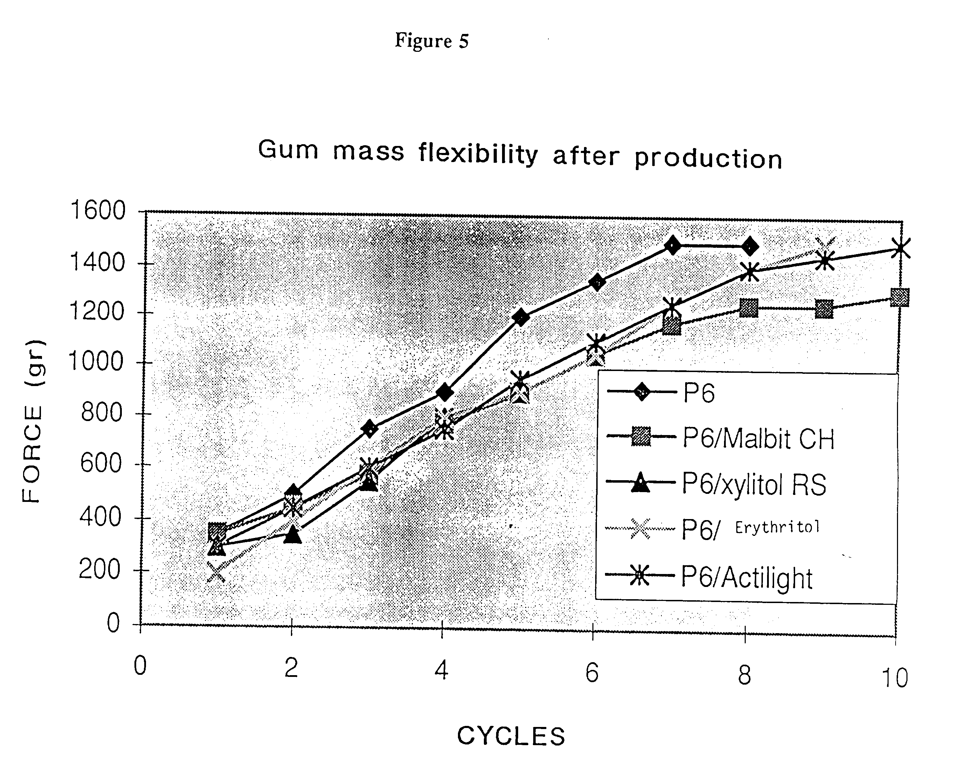

The number of cycles before breakage of the rope and forces increase are measured by means of a dynamometer.
Immediately after production no significant differences are measured on the fresh gum masses in comparison with the sorbitol powder (see Figure 5).

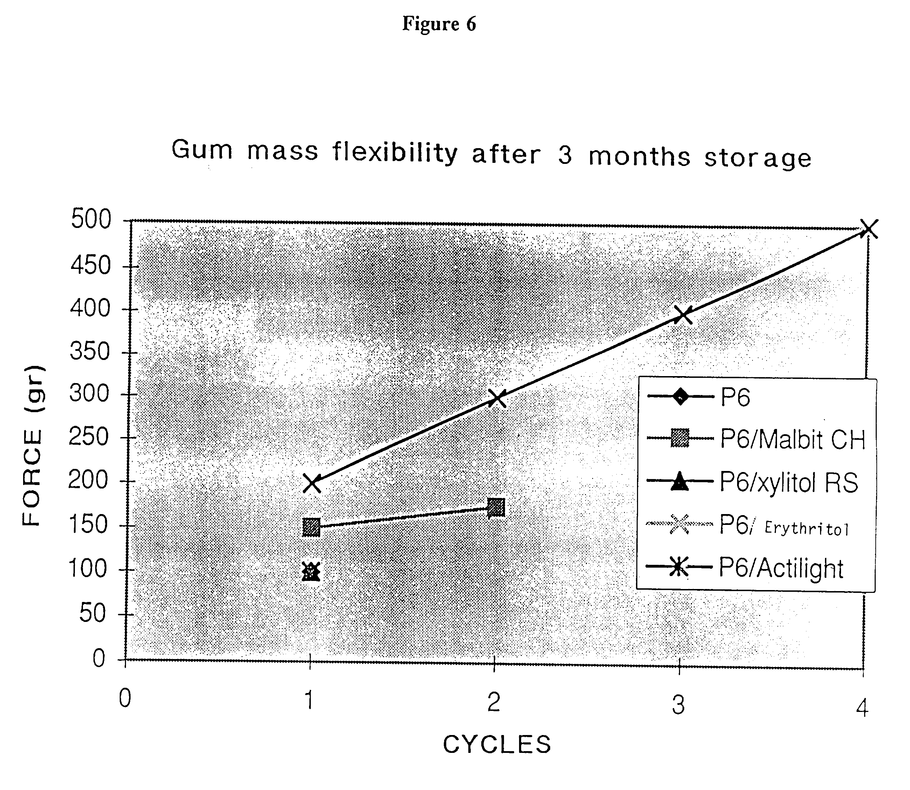

Wrapped samples were stored during 3 months at 35°C and 70% relative humidity. The results show a significantly higher degree of flexibility for the combination sorbitol/erythritol. All other formulations give a very low degree of flexibility except for the combination of Malbit^{tm}CH which is slightly superior to pure sorbitol (see Figure 6).

### Example 3

Pure erythritol was used in a chewing gum formulation. The formulation was prepared as follows.
The kneader is heated to about 40°C and warm gum base having a temperature of about 45°C is added. Kneading is performed for 2 minutes. 50% of the erythritol powder and 50% of the mannitol powder are added and kneading is continued for 8 minutes. The maltitol syrup is added, kneading is continued for 4 minutes.Glycerol is added and kneading is continued for 3 minutes. Finally, the flavour is added and kneading is continued for 2 minutes. The mass is then extruded and laminated.

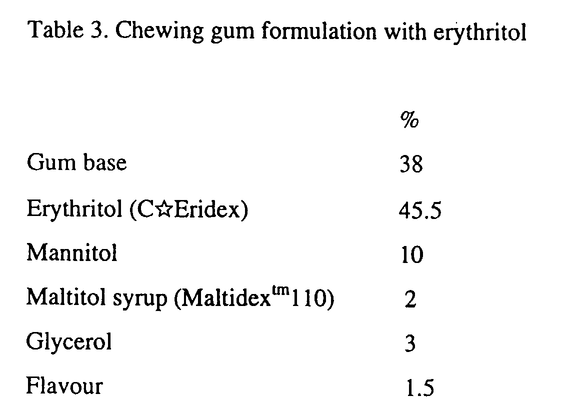

The chewing gum has an excellent flexibility even after a prolonged storage period of a few months.

### Example 4

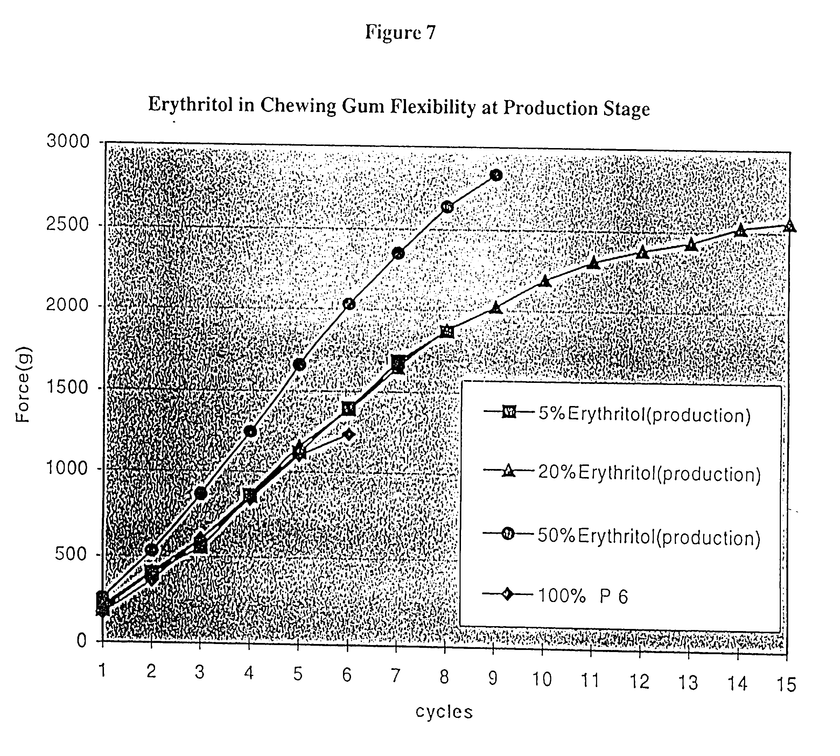

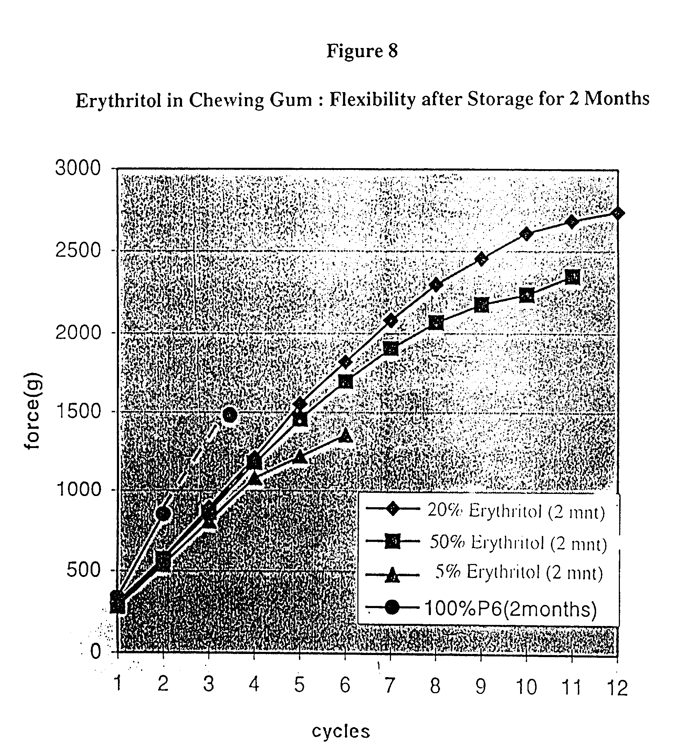

Example 2 was repeated in that medium liquid phase chewing gums were prepared with different amounts of erythritol eg. 5 %, 20%, and 50%. Flexibility was measured immediately after production and after 2 months storage. From Figures 7 and 8 it can be seen that with 20% of the sorbitol powder replaced by erythritol the chewing gums are best with respect to flexibility.

### Example 5

Example 2 was repeated but this time with 20% erythritol. The erythritol was used in the form of powder with different particle size distribution. Three different powders were used ie. smaller than 0.12 mm, between 0.12 and 0.2 mm and larger than 0.3 mm.

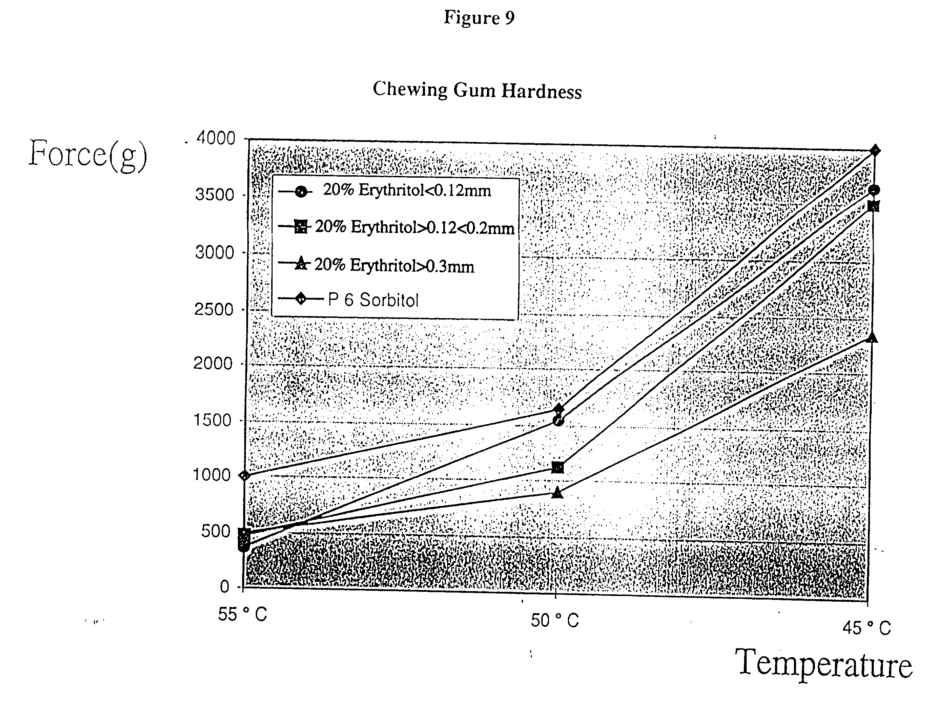

From Figure 9 it can be seen that the particle size of the erythritol influences the hardness of the chewing gum and that with increasing particle size the chewing gum becomes softer.

### Example 6

Example 2 was repeated in that medium liquid phase chewing gums were prepared. In this case 20 % of the sorbitol powder was replaced by different sugar alcohol powders and flexibility was measured immediately after production and after 3 months. The results are shown in Table 4. It can be concluded that erythritol and lactitol are superior to the other mentioned polyols and all are superior to sorbitol.

**Table 4.**

| Flexibility of chewing gum compositions with different polyols (20% of sorbitol replaced). | | |
|---|---|---|
| | Flexibility (number of cycles) | |
| | after production | after 3 months |
| erythritol | 15 | 12 |
| maltitol | 15 | 7 |
| lactitol | 15 | 10 |
| xylitol | 13 | 9 |
| mannitol | 11 | 8 |
| isomalt | 8 | 6 |
| | | |
| sorbitol (100%) | 6-7 | 2-4 |

## Claims

1. A chewing gum composition which does not become brittle after storage during a few months consisting essentially of a gum base, a polyol, optionally mannitol and maltitol, glycerol and erythritol characterised in that between 5 and 30% of the polyol is erythritol.

2. A chewing gum composition which does not become brittle upon storage during a few months comprising
a) between 20 and 60 % gum base,
b) between 5 and 60 % polyol,
c) between 0 and 20 % mannitol,
d) between 0 and 10 % maltitol syrup,
e) between 0 and 8% glycerol and
erythritol characterised in that between 5 and 30 % of the polyol is erythritol.

3. A composition according to claim 1 or 2 characterised in that the polyol is sorbitol.

4. A composition according to claim 1 to 3 characterised in that the amount of erythritol is between 10 and 25 % of the amount of polyol.

5. A composition according any one of claims 1 to 4 characterised in that the erythritol has a particle size selected from the following group smaller than 0.12mm., between 0.12mm. and 0.2 mm, larger than 0.3mm.

6. A chewing gum characterised in that it is a coated gum wherein the coating is applied to the composition of any one of the previous claims.

7. A method for producing a chewing gum composition according to any one of the previous claims characterised in that it comprises the following steps;
heat a kneader to about 50°C, add warm gum base having about the same temperature, knead for 1-10 minutes, add 50% of the sorbitol powder and/or the polyol, knead for 1-10 minutes, add the remaining sorbitol powder and or polyol powder, knead for 1-10 minutes add the other components such as glycerol, the flavour with intermittent kneading, extrude and laminate.
